(19) Europäisches Patentamt
European Patent Office
Office européen des brevets

(11) **EP 3 985 348 B1**

(12) **EUROPEAN PATENT SPECIFICATION**

(45) Date of publication and mention of the grant of the patent:
**02.11.2022  Bulletin 2022/44**

(21) Application number: **20461570.2**

(22) Date of filing: **15.10.2020**

(51) International Patent Classification (IPC):
**G01B 15/02** *(2006.01)*

(52) Cooperative Patent Classification (CPC):
**G01B 15/02**

(54) **DEVICE AND METHOD FOR TESTING THICKNESS OF A WALL OF A DIELECTRIC TUBULAR OBJECT**

VORRICHTUNG UND VERFAHREN ZUR PRÜFUNG DER DICKE EINER WAND EINES DIELEKTRISCHEN ROHRFÖRMIGEN OBJEKTS

DISPOSITIF ET PROCÉDÉ POUR TESTER L'ÉPAISSEUR D'UNE PAROI D'UN OBJET TUBULAIRE DIÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.04.2022  Bulletin 2022/16**

(73) Proprietor: **Instytut Wysokich Cisnien Polskiej Akademii Nauk**
**01-142 Warszawa (PL)**

(72) Inventors:
• **MIKHNEV, Valeri**
  **02-384 Warszawa (PL)**
• **KNAP, Wojciech**
  **05-807 Podkowa Lesna (PL)**
• **SKOTNICKI, Tomasz**
  **02-786 Warszawa (PL)**

(74) Representative: **Bury, Marek**
**Bury & Bury**
**ul. Przyczolkowa 124**
**02-968 Warszawa (PL)**

(56) References cited:
**EP-A1- 0 529 790       WO-A1-2016/209375**
**US-A1- 2009 010 385    US-A1- 2011 050 248**

**Description**

The invention concerns a device and a method for testing thickness of a wall of a dielectric tubular object's especially plastic bottles.

Plastic bottles and containers are commonly used nowadays in packaging. They are widely used to store liquids such as water, soft drinks, motor oil, cooking oil, medicine, shampoo, milk etc. Almost 99% of plastic bottles in the world are made of polyethylene terephthalate (PET) and high-density polyethylene (HDPE) while polypropylene (PP) accounts for remaining 1%. During the blow molding process, thickness of different parts of the bottle body may vary in some range due to influence of temperature and equipment. Thinner parts of the bottle generally have weaker mechanical properties while too thick walls result in over-expenditure of material resources, and that requires the inline quality control. Plastic materials are generally transparent to microwave and THz radiation.

Conventional method of measuring wall thickness uses measurement probes based on Hall effect. The measurement probe connected to an instrument is placed close to the wall while a metallic sphere is dropped inside the bottle. An example of applicable instrument is Magna-Mike 8600. However, the need to put the ball inside the bottle limits the application area of the method to the laboratory use.

Another conventional measurement technology is based on a non-contact laser-based imaging technology. This technology is accurate and fast enough to provide 100% testing in the production line with the possibility of feedback to blow molder, but it is suitable only to transparent and semitransparent plastic containers. However, for the sake of preservation of the content from the harmful influence of the sunlight, a lot of plastic bottles is made nowadays non-transparent that prevents use of optical measurement technologies.

A relatively new terahertz time-domain spectroscopy (THz-TDS) measurement technology employs terahertz pulses created in photoconductive antennas by femtosecond laser. Almost all plastics including PET, HDPE and PP are transparent in the terahertz range. That is why the application area of the method is not limited by the material type and color. The duration of pulse transmitted through the plastic layer is close to 1-2 ps, thus the pulses reflected from front and back interfaces are resolved and one can determine the thickness from the difference of their travel times. The sensitivity of the method is about 1 ps/100 $\mu$m that may obstruct attaining the desired measurement accuracy of wall thickness $\pm$10 $\mu$m as the received terahertz pulse has duration around 1-2 ps. US patent application US20190041200A1 METHODS AND SYSTEMS FOR THICKNESS MEASUREMENT OF MULTI-LAYER STRUCTURES discloses application of such approach.

Publication no EP3480553 of European patent application no EP18204388 entitled "TERAHERTZ MEASURING APPARATUS AND METHOD FOR MEASURING AT LEAST ONE WALL THICKNESS OF A TUBULAR OBJECT TO BE MEASURED", discloses THz measuring device for measuring at least one wall thickness of a tubular object under test having an inner surface. It has main sensor and additional sensor. Each sensor has transmitter adapted to emit a THz main beam along optical axis and receiver for receiving reflected signals. Signals are reflected from the outer surface and the inner surface of object under test. Analysis of reflected signals allows determination of the thickness of the object.

Publication no WO2008011865, of international patent application no PCT/DE2007/001279 entitled "METHOD FOR MEASURING THE WALL THICKNESS" discloses a method for measuring the wall thickness applicable to measuring the wall thickness of objects made of insulating materials, such as glass or plastics. The method for measuring the wall thickness of insulating materials has the wall which is to be measured with regards to its thickness being irradiated by high frequency electromagnetic waves and the radiation reflected by the irradiated wall being received, so that a complex reflection factor can then be calculated from the emitted and reflected signal. The determined complex reflection factor is classified according to its real and imaginary part or according to its absolute value and phase within a complex calibrating curve family, the wall thickness to be measured being obtained from the location of the complex reflection factor within the complex calibrating curve family. The method is intended for measuring the wall thickness of glass bottles with the thickness of 1-3 mm while wall thickness of modern plastic bottles is typically of 0.1-1.0 mm, with a lower dielectric constant. Hence, sensitivity and accuracy of the method in testing of plastic bottles is much lower. Additional source of error is related to the reflection of the wave from the opposite wall of bottle.

Publication no WO2011050959, of international patent application no PCT/EP2010/006590 entitled "METHOD AND DEVICE FOR IDENTIFYING A MATERIAL" discloses a method for identifying a material, wherein THz radiation is generated using a THz transmitter, which radiation simultaneously or sequentially comprises at least one first frequency portion and a second frequency portion different therefrom. An object formed from the material to be identified is irradiated with said THz radiation and the THz radiation exiting the object is detected using a phase-sensitive THz receiver. At least for the first frequency portion, a time or phase offset, which has been caused by the object, of a received signal generated in the phase-sensitive THz receiver is measured from which a dimension for a material thickness is determined. A corresponding device for identifying a material transparent to THz radiation is also disclosed. Other device for determining the wall thickness of a plastic bottle based on the measured absorption of transmitted electromagnetic radiation (e.g. in the THz range) is disclosed in US 2009/010385 A1.

The above mentioned methods based on THz technologies, typically on, femtosecond laser-based time domain spectrometers operating are sensitive and accurate enough, but they also suffer from typical drawbacks of optoelectronic THz devices, especially complicated structure and susceptibility to harsh environmental conditions such as temperature variations and vibrations in industrial applications.

It is an object of the invention to overcome above disadvantage and provide a method of fast and accurate thickness measurement based on easily available devices.

A device for testing thickness of a wall of a dielectric tubular object has a space adapted to accommodate at least part of the wall of the tubular object. The device further has a transmitter and a first coupling system comprising a first waveguide extending towards said space and bent in its proximity. The transmitter is adapted to induce guided wave in the first waveguide. The first waveguide is adapted to induce guided wave inside the wall of the tubular object located in said space. The device further has a receiver and a second coupling system comprising a second waveguide extending towards said space and bent in its proximity. The second waveguide is adapted to receive guided wave propagating in the wall of the tubular object located in said space. The receiver is adapted to receive guided wave in the second waveguide and measure time of propagation representative of the thickness of the wall of the tubular object. Device is adapted to measure time of propagation of radiation between transmitter and receiver. Transmitter has a first coupling system to direct radiation in a form of guided wave into interior of the wall of the tubular object located in said space. The receiver has a second coupling system to receive guided wave propagating in the wall of the tubular object located in said space. The transmitter and the receiver are adapted to operate at a frequency band comprising frequency selected from a range 50 GHz - 500 GHz. Millimeter wave (MMW) signals at those frequencies can relatively easily be guided within plastic slabs having thickness between 0.05 and 2 mm. This makes the inventions applicable to measuring walls of typical plastic bottles and some of pipes. Use MMW signal guided within the wall of the tubular object instead of reflected signals or "coming through signals" allow larger area of wall to contribute to result of test thus increasing sensitivity when relatively low frequencies are used.

Advantageously the first and/or the second coupling system comprises a dielectric waveguides extending towards said space and bent in its proximity. This allows to easily induce/receive guided wave.

Advantageously bent portions of the first and the second dielectric waveguide are spaced by 10 to 50 mm and hence transmitter and receiver are adapted to be coupled to the wall of the tubular object in areas spaced by 10 mm to 50 mm.

Transmitter and receiver are adapted to operate at a frequency band comprising frequency selected from a range 70 GHz - 250 GHz contributes to increased sensitivity in popular values of thickness of walls of common plastic bottles - range 0.1-1.0 mm.

Frequency band advantageously comprises frequency selected from a range 70 GHz - 150 GHz. It contributes to good sensitivity of measurement of thickness of plastic walls in a range 0.5 - 1 mm.

Frequency band advantageously comprises frequency selected from a range 150 GHz - 250 GHz which is suitable for measuring thickness in a range 0.1-0.5 mm.

Transmitter and receiver are integrated into single sensor with a reference channel - that configuration makes it easier to measure propagation time.

Single sensor is advantageously radar frequency modulated continuous wave (FMCW) sensor. These sensors are fast enough to allow continuous real time measurement and still provide adequate measurement precision.

In a method for testing thickness of a wall of a dielectric tubular objects by directing a radiation into the tubular object and receive the radiation from the tubular object located at least partly in space, measuring a delay and determining thickness of the wall of the tubular object from said delay, according to the invention radiation is MMW radiation at frequency band comprising frequency from range 50 GHz - 500 GHz. Radiation from transmitter is coupled into the wall of the tubular object so that the radiation propagates in a form of guided wave inside the wall of the tubular object and afterwards is coupled to the receiver. MMW signals at those frequencies can relatively easily be guided within plastic slabs having thickness between 0.05 and 2 mm. This makes the inventions applicable to measuring walls of typical plastic bottles and some of pipes. Use MMW signal guided within the wall of the tubular object instead of reflected signals or "coming through signals" allow larger area of wall to contribute to result of test thus increasing sensitivity when relatively low operating frequencies are used.

Frequency band advantageously comprises frequency from range 70 GHz - 250 GHz providing good sensitivity for measurements of plastic wall within a range of 0.1 mm to 1.0 mm. Frequency band comprising frequency from range 70 GHz - 150 GHz is advantageous for measurement of thickness within a range 0.5 to 1.0 mm. Frequency band comprising frequency from range 150 GHz - 250 GHz is advantageous for measurement thickness from range 0.1 mm to 0.5 mm.

Advantageously mode $TE_0$ is induced within the wall of the tubular object. The next mode $TE_1$ can exist in the plastic wall 0.1-1.0 mm only above approximately 250-500 GHz.

Advantageously tubular object is moved continuously through the space during testing. That enables convenient real time measurement.

Advantageously transmitter and receiver are coupled to the wall of the tubular object in areas spaced by 10 mm to 50 mm.

The invention has been described below in detail, with reference to the figures:

Fig. 1 presenting schematically block diagram of device according to the invention and tubular object (top view);
Fig. 2 presenting chart of delay factor versus frequency of the guided wave for mode $TE_0$ in the dielectric slab with dielectric permittivity $\varepsilon$=2.56;
Fig. 3 presenting Calculated time delay of the mode $TE_0$ travelling over the length L= 20 mm in the dielectric slab with dielectric permittivity $\varepsilon$=2.56;
Fig. 4 Time delay of the signal in the segment of plastic bottle of the length 32 mm versus wall thickness;
Fig. 5 showing schematically continuous measurements of plastic bottles on a conveyor belt.

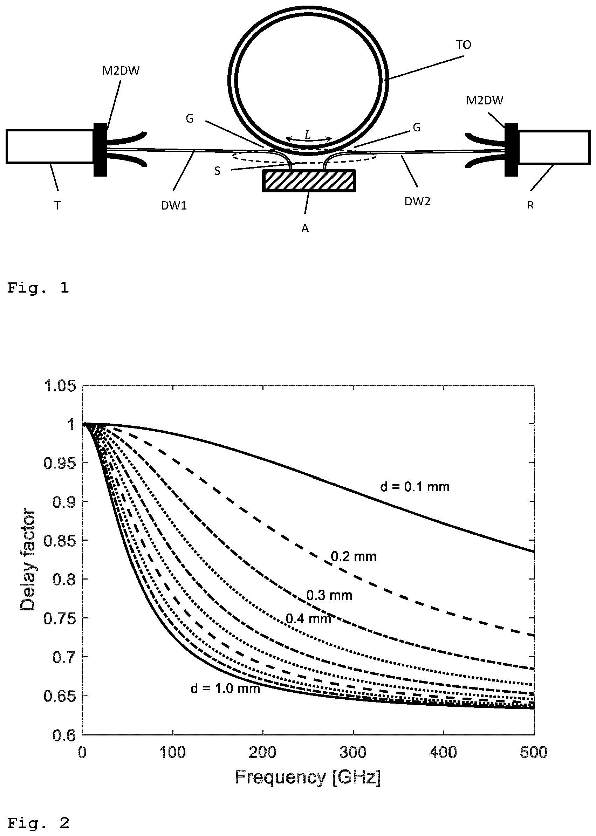

In the embodiment shown schematically in Fig. 1, MMW signal is generated by MMW transmitter **T** having metal waveguide output port. Metal to dielectric waveguide transition **M2DW** is attached to the output port and dielectric waveguide **DW1** is attached to the transition **M2DW**. The dielectric waveguide is driven through the border area of a space **S** adapted to receive dielectric tubular object **TO** under test, bent and directed towards absorber **A**. Bent area of the first dielectric waveguide **DW1** runs through the space **S** and is arranged to be in proximity of tubular object once it occupies the space **S**. The second dielectric waveguide **DW2** is connected to input port of a receiver **R** via second metal to dielectric waveguide transition **M2DW**. The second dielectric waveguide **DW2** is driven through the border area of a space **S** adapted to receive dielectric tubular object **TO**. Within the space **S** the second dielectric waveguide **DW2** is bent and directed towards absorber **A**. Second waveguide **DW2** is arranged symmetrically to the first dielectric waveguide **DW1,** but the first and the second dielectric waveguide are not connected. Absorber **A** prevents multiple reflections. Other means therefore are also applicable.

Transmitter **T** and receiver **R** can be integrated into the same device. In the present embodiment there is applied system-on-chip (SoC) industrial radar sensor IWR1843 of Texas Instruments. It is a frequency modulated continuous wave (FMCW) radar sensor having transmitter and receiver, operating in frequency band 76-81 GHz. SoC sensors are easily available and convenient in use. They may return time of propagation directly or allow easy control with control unit such as microprocessor or microcontroller programmed to perform state of the art methods of measuring propagation time and calibration.

Tubular object **TO** under test, for example plastic bottle is placed in the space **S** so that it is at subwavelength distance from a bent sections of both dielectric waveguides **DW1** and **DW2**. When transmitter **T** induces wave in the first dielectric waveguide **DW1,** the wave is guided towards the absorber **A**. When guided wave reaches bent portion of the waveguide located in a proximity of the tubular object **TO** wall - that is area located in distance lower than wavelength, a part of an energy of the wave transfers through the gap **G** between the first waveguide **DW1** into the wall of dielectric tubular waveguide and induces surface wave.

The wall of the dielectric tubular object **TO** is a dielectric slab which also can guide electromagnetic wave at frequencies between 50 and 500 GHz. Consequently guided wave of **DW1** launches the guided wave in the bottle wall that propagates along the wall and reaches proximity of the bent section of the second waveguide **DW2**.

Part of energy propagating inside the wall of the tubular object **TO** transfers through subwavelength gap **G,** to induce a guided wave in the second dielectric waveguide **DW2**. The second dielectric waveguide **DW2** guides said wave to the receiver **R.**

The wave guided in dielectric waveguide **DW1** is not reflected at its end as it is absorbed in the absorber **A**.

Time difference between transmission of radiation from transmitter **T** and reception in receiver **R** is a result of superposition of delays in the dielectric waveguides **DW1** and **DW2,** delays in coupling gaps **G** between the waveguides and wall of the tubular object **TO** and time of propagation inside wall of the tubular object **TO.**

The delays introduced by dielectric waveguides are constant in the measurement setup. Width of coupling gaps **G** is equal to the distance between the wall of the tubular object **TO** and dielectric waveguides **DW1** and **DW2**. Depending on how tubular object is placed in the space **S,** width of the coupling gaps **G** typically may vary between 0.1-0.5 mm.

For given material, shape and diameter of the tubular object **TO,** the length of the propagation path in the wall of the tubular object placed in space **S** is also constant. Consequently the remaining variable parameter that affects the total time of propagation between transmitter **T** and receiver **R** is the thickness of the wall of the tubular object **TO** in which the wave propagates.

Mathematical model of propagation wave of guided along the wall that is a dielectric slab is well known. Similarly to other transmission lines, there exist two sets of modes: transverse-electric - TE, having electric field parallel to the slab faces and transverse-magnetic - TM modes.

The lowest-order modes $TE_0$ and $TM_0$ do not have cut-off while higher-order modes can exist only when the frequency is above the cut-off frequency.

Although in the present embodiment TE have been used TM modes are applicable too.

Propagation constant for TE modes is defined by equations:

$$\tan\frac{\kappa d}{2} = \frac{\gamma}{\kappa} \quad - \text{ for modes of order } 0,2,4,\ldots;$$

and

$$\tan\frac{\kappa d}{2} = -\frac{\kappa}{\gamma} \quad - \text{ for modes of order } 1,3,5,\ldots;$$

where

$$\kappa^2 = \varepsilon k_0^2 - \beta^2;$$

$$\gamma^2 = \beta^2 - k_0^2 \; ;$$

and

$\beta$ is the propagation constant of the mode;
$k_0 = \frac{2\pi f}{c}$ is the free-space wavenumber.
$\varepsilon$ denotes for the dielectric permittivity of the slab; and
d denotes thickness of the wall,
$f$ is frequency and c is velocity of light in a free space.

Transcendental equations above have numerical solutions with respect to propagation constant $\beta$ of given mode. $\beta$ enables determining delay factor or ratio between phase velocity of the mode and velocity of light in free space:

$$\text{Delay factor } = \frac{v_p}{c} = \frac{k_0}{\beta} \; .$$

Person skilled in the art can routinely find similar set of equations for TM modes.

With IWR1843 radar sensor in a rather narrow bandwidth of a few GHz, the measurement accuracy of about $\pm 10$ $\mu$m had been achieved that corresponds to the accuracy in time delay of $\pm 0.03$ ps. Measurement of time of propagation was realized with using method disclosed in M. Z. Ikram, A. Ahmad, and D. Wang, "High-accuracy distance measurement using millimeter-wave radar," in Proc. IEEE Radar Conf. (RadarConf), Apr. 2018, pp. 1296-1300.

Fig. 2 shows the delay factors obtained for the mode $TE_0$ in the range of frequencies 0-500 GHz for dielectric slabs with the dielectric permittivity of PET (the most widespread material of plastic bottles) $\varepsilon$=2.56 and for thicknesses in the range of 0.1-1.0 mm (most bottles have wall thickness within this range).

In Fig. 2 one can observe remarkable variation of the delay factor versus slab thickness in the frequency range above 70 GHz. Consequently, these frequencies are applicable for use in a device for testing thickness according embodiment of the invention having a block diagram shown in Fig. 1.

For better clarity, with the use of Fig. 2 the time delay in the dielectric slab at the given distance L can be calculated as:

$$\text{Time delay} = \frac{L}{v_p}$$

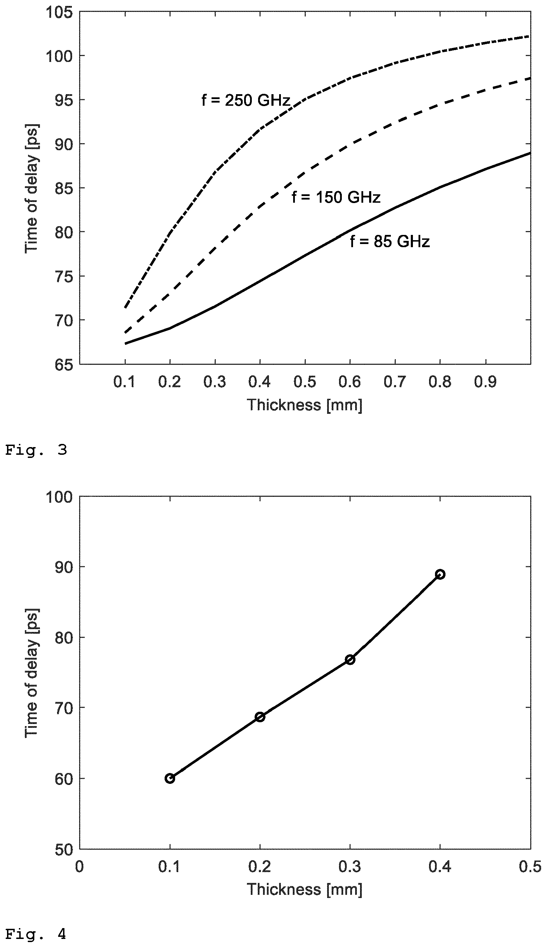

Results of calculations of the time delay on the distance L=20 mm versus slab thickness are presented in Fig. 3 for three selected frequencies: 85, 150 and 250 GHz.

Length L=20 mm corresponds to distance of propagation of wave inside the wall of the tubular object **TO,** between a point at which the first waveguide **DW1** is coupled to said wall and the point at which the second waveguide **DW2** is coupled to said wall. Consequently, the thickness measurement is done over the extended area e.g. of 20×3 mm.

The area of measurement is a tradeoff. If area of measurement is too small than multiple repetition of measurements are required to obtain reasonable probability of detection of defect when defect is present. On the other hand if measurement area is too large then aberration of the width within defect is averaged across whole measurement area and may pass undetected. E.g. measurement along whole circumference of tubular object being a bottle results in averaging that masks defects large enough to disqualify said bottle. For PET bottles reasonable results were obtained when length of propagation of the MMW signal between coupling points was 10 to 50 mm; 20 mm ± 5 mm seemed to be optimal. As the propagation along length L in such conditions is much longer than propagation across the bottle wall MMW devices are sufficiently precise and can replace THz techniques that are required to obtain sufficient resolution when signals reflected from or transmitted across the wall are analyzed.

At the frequency 85 GHz, the time delay depends on the slab thickness in the range 0.1-1.0 mm almost linearly, though the sensitivity is not very high. The slope of time delay versus thickness is much steeper in the range 0.1-0.5 mm at the frequency 150 GHz. Even larger sensitivity to thin layers can be observed at the frequency of 250 GHz. However, at this frequency the slope of the curve decreases considerably for thickness 0.5-1.0 mm.

Inventors analysing Fig. 3 observed that the measurement of the bottle wall thickness in the range 0.5-1.0 mm can be done preferably at frequency 70-150 GHz while the better sensitivity to thin walls 0.1-0.5 mm can be achieved at frequencies 150-250 GHz.

Transmitter **T** and receiver **R** for the frequency 150 GHz can be considered if the full range of thickness 0.1-1.0 mm should be covered in a single inspection system.

According to Fig. 3, the sensitivity of the method varies from 2.5 ps to 7 ps per 100 $\mu$m of thickness. This is considerably better than in terahertz time-domain system like PlastiMeasure™ having the sensitivity about 1 ps of time delay per 100 $\mu$m of thickness variation.

In principle, even transmitter and receiver operating at single frequency can be used for thickness measurement. In this case, the thickness can be estimated from the measured phase shift of the received signal. However, this approach results in known in the art issues with phase-unwrapping.

Much more accurate and reliable results can be obtained using wideband transceivers. Both FMCW and pulsed systems are applicable for the invention.

In another embodiment of the device according to the invention vector network analyzer with frequency extenders for the frequency range of 90-140 GHz was used. One port served as transmitter **T** and the other as the receiver **R.**

Dielectric waveguides were fabricated from polyethylene and shaped as rectangular rods with cross section 2.0×1.0 mm.

The metal-to-dielectric waveguide transitions having the shape of exponential horns have been used to match waveguide outputs of the frequency extenders with the dielectric waveguides.

The dielectric waveguides were inserted in the transitions to launch in **DW1, DW2** the wave polarized parallel to broad walls of **DW1, DW2.** In this case, coupling through the broad wall excites $TE_0$ mode in the wall of tubular object **TO.**

The tubular object's wall was mimicked by a simulant being a curved PET sheet with the thickness 0.1; 0.2; 0.3 and 0.4 mm and the diameter of 80 mm which is close to the diameter of a typical one-liter plastic bottle. For demonstration purpose, the dielectric waveguides were positioned so that the test length of PET segment was of 32 mm. The time delay was evaluated from the frequency-domain data using Fourier transform and subsequent determination of the position of a peak of the transformed signal. The measurement results are shown in Fig. 4.

Simple calibration procedure has been applied the use of one bottle sample made of the same plastic with wall thickness below nominal. The bottle is placed close to the **DW1** and **DW2** at a fixed distance of about 0.5 mm, then the time delay of the received signal is measured. Then the bottle is wrapped by a sheet of the same material having the thickness e.g. 100 $\mu$m and the measurement is repeated. Actual bottle wall thickness is then obtained by linear interpolation of the calibration data.

In process of verification of thickness of the wall of the tubular objects it is enough to gate the time of propagation and trigger alarm when it is too short or too long.

Numerous off-the-shelf components and known methods of propagation time measurement are available for advantageous frequency bands mentioned in the description above. For range 122-123 GHz extensive study is provided in M. Pauli et al., "Miniaturized millimeter-wave radar sensor for high accuracy applications," IEEE Trans. Microw. Theory Techn., vol. 65, no. 5, pp. 1707-1715, May 2017. For 160 GHz band pulsed measurement technique is disclosed in B. Ginsburg, S. Ramaswamy, V. Rentala, E. Seok, S. Sankaran, and B. Haroun, "A 160 GHz pulsed radar transceiver in 65 nm CMOS," IEEE J. Solid-State Circuits, vol. 49, no. 4, pp. 984-995, Apr. 2014. Person skilled in the art can easily provide numerous other methods of using transmitter and receiver to measure time of propagation. Use of single SoC makes this task easier.

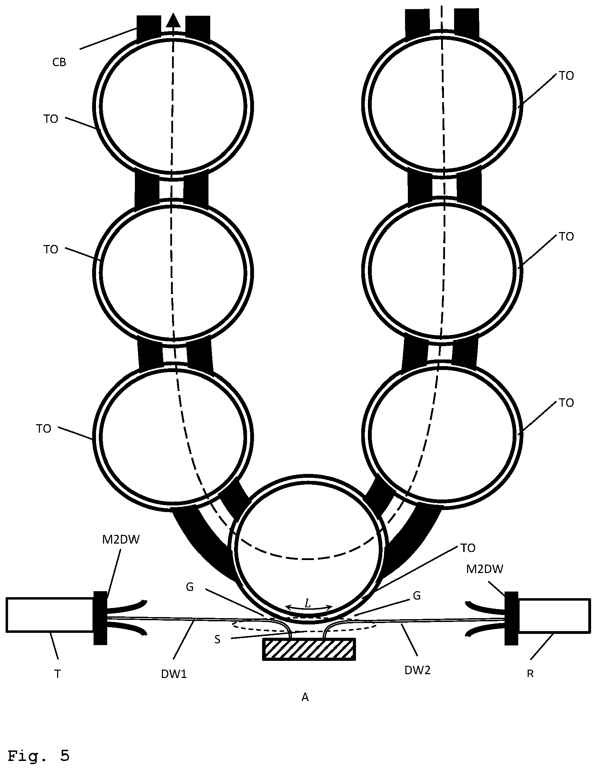

Additional advantage of FMCW SoC radar sensors is their speed. Chirp duration of IWR1843 is just 125$\mu$s while measurement accuracy of 1 $\mu$m can be obtained. That allows advantageous use of the present invention to verify thickness of tubular objects, especially plastic bottles transported on conveyor belt - as shown in Fig. 5. Locating space **S** of the device according to the invention in proximity of the trajectory of tubular objects **TO** when they are transported on tubular belt **CB** and perform thickness verification in real time just on a base of time of propagation. That enables use of the invention in production lines. If device according to the invention is located on a turn or turnover of conveyor belt - as shown in Fig. 5 motion of tubular objects **TO** on conveyor belt enables measurements in multiple measurements areas determined by length L along circumference of the tubular objects **TO.**

In embodiments described above only one approach towards inducing guided wave inside wall of tubular object was demonstrated. It consists in a use of dielectric waveguides **DW1** and **DW2** bent and placed close enough that is less than wavelength, preferable 0.1 ÷ 0.5 mm from the wall. Coupling between dielectric waveguides **DW1, DW2** and the wall of tubular object can be obtained with direct contact or via subwavelength gap **G.** In the latter case, the coupling is possible due to evanescent field existing around the dielectric waveguide. This evanescent field penetrates into the bottle wall and excites there the guided wave. At the frequencies below 100 GHz, a good enough coupling can be achieved through the gap of 0.5-1 mm. At higher frequencies, the gap should be smaller. So, for accurate thickness measurement the bottle must be placed at a distance below 1 mm that must be preferably fixed at a moment of measurement. Still person skilled in the art is able to routinely produce numerous alternatives to induce coupling between a transmitter/receiver and a wall of dielectric tubular object to induce/receive a wave guide inside the wall of this tubular object. These methods fall into the scope of the invention as defined in the attached claims.

It is noted however that dielectric waveguides have certain advantages as they are easily replaceable. Coupling between the wall of the tubular object **TO** and dielectric waveguide is easier when velocity of MMW in dielectric waveguide **DW1, DW2** and velocity of MMW in the wall of the dielectric tubular object are similar or even equal. Therefore, dielectric waveguides **DW1, DW2** can be selected so that their propagation constants of basic modes were close to propagation constant of the measurement mode of the wall.

The larger is the difference of phase velocities, the weaker is the coupling. The same condition is valid at the receiving end, when the wave transfers from the bottle wall to **DW2.** Therefore, **DW1** and **DW2** should be designed to ensure that the phase velocity of the guided wave in them is nearly equal to the phase velocity of the guided mode of the bottle wall over the thickness range of interest.

The invention consists in using in measurements a wave guided inside a plastic wall instead of measuring signals reflected from boundaries air-wall and wall-air to determine delays corresponding to thickness of bottle. Used model of propagation inside the wall increases propagation time and enables use of much lower frequencies and consequently use of integrated solid-state devices having integrated multiple transmitters and receivers. Sector of SoC is growing rapidly. They are off-the-shelf components that can either be controlled by the external control unit or be designed to produce signal representing delay in propagation between various pairs transmitter-receiver integrated in single device. Such configurations make measurements of time of propagation really easy.

It is noted that above examples are meant only to illustrate not limit the invention as defined by attached claims. Person skilled in the art is able to propose numerous transmitters, receivers, transceivers, integrated sensors and other devices applicable to implement alternative embodiments of the invention that are covered by the scope of protection of attached claims.

Furthermore, person skilled in the art is able to suggest other alternative means for coupling the transmitter and receiver with dielectric wall in a manner allowing excitation and reception of a wave guided inside said wall. Use of dielectric prism instead waveguide **DW1, DW2** is an easy example of such alternative. Coupling systems may be configured to excite different modes inside wall. All modifications of coupling systems are covered by the scope of protection.

It is possible to apply microcontrollers, microcomputers and other control units to measure and analyze time of propagation of wave inside the wall for different spatial and signal configurations of transmitter and receiver to formulate more complex conditions of defect detection. Such modification does not constitute circumvention of the scope of protection.

**Claims**

1. A device for testing thickness of a wall of a dielectric tubular object **(TO),** having

   a space **(S)** adapted to accommodate at least part of the wall of the tubular object **(TO),**
   a transmitter **(T)** and a first coupling system comprising a first waveguide **(DW1)** extending towards said space **(S)** and bent in its proximity, wherein the transmitter is adapted to induce guided wave in the first waveguide **(DW1)** and the first waveguide **(DW1)** is adapted to induce guided wave inside the wall of the tubular object **(TO)** located in said space **(S),**
   a receiver **(R)** and a second coupling system comprising a second waveguide **(DW2)** extending towards said space **(S)** and bent in its proximity, wherein the second waveguide **(DW2)** is adapted to receive guided wave propagating in the wall of the tubular object **(TO)** located in said space **(S)** and the receiver is adapted to receive guided wave in the second waveguide **(DW2)** and measure time of propagation representative of the thickness of the wall of the tubular object **(TO)**

wherein the transmitter **(T)** and the receiver **(R)** are adapted to operate at a frequency band comprising frequency selected from a range 50 GHz - 500 GHz.

2. Device according to claim 1, **characterized in that** transmitter **(T)** and receiver **(R)** are adapted to operate at a frequency band comprising frequency selected from a range 70 GHz - 250 GHz.

3. Device according to claim 2, **characterized in that** transmitter **(T)** and receiver **(R)** are adapted to operate at a frequency band comprising frequency selected from a range 70 GHz - 150 GHz.

4. Device according to claim 2, **characterized in that** transmitter **(T)** and receiver **(R)** are adapted to operate within a frequency band comprising frequency selected from a range 150 GHz - 250 GHz.

5. Device according to any of the preceding claims **characterized in that** transmitter **(T)** and receiver **(R)** are integrated into single sensor with a reference channel.

6. Device according to claim 5, **characterized in that** single sensor is radar frequency modulated continuous wave sensor.

7. A method for testing thickness of a wall of a dielectric tubular objects **(TO)** by directing a radiation into the tubular object **(TO)** and receive the radiation from the tubular object **(TO)** located at least partly in space **(S)**, measuring a delay and determining thickness of the wall of the tubular object **(TO)** from said delay, **characterized in that** the radiation is millimeter wave radiation at frequency band comprising frequency from range 50 GHz - 500 GHz and the radiation from transmitter **(T)** is coupled into the wall of the tubular object **(TO)** so that the radiation propagates in a form of guided wave inside the wall of the tubular object **(TO)** and is afterwards coupled to receiver **(R).**

8. A method according to claim 7, **characterized in that** the radiation is microwave radiation at frequency band comprising frequency from range 70 GHz - 250 GHz.

9. A method according to claim 8, **characterized in that** the radiation is microwave radiation at frequency band comprising frequency from range 70 GHz - 150 GHz.

10. A method according to claim 8, **characterized in that** the radiation is microwave radiation at frequency band comprising frequency from range 150 GHz - 250 GHz.

11. A method according to claim 10, **characterized in that** mode $TE_0$ is induced within the wall of the tubular object.

12. A method according to claim 11, **characterized in that** the tubular object **(TO)** is moved continuously through the space **(S)** during testing.

13. A method according to any of the preceding claims, **characterized in that** transmitter **(T)** and receiver **(R)** are coupled to the wall of the tubular object **(TO)** in areas spaced by 10 mm to 50 mm.

**Patentansprüche**

1. Vorrichtung zum Prüfen der Dicke einer Wand eines dielektrischen röhrenförmigen Objekts (TO), mit

   einem Raum (S), der angepasst ist, um mindestens einen Teil der Wand des röhrenförmigen Objekts (TO) aufzunehmen,
   einem Sender (T) und einem ersten Kopplungssystem, das einen ersten Wellenleiter (DW1) umfasst, der sich in Richtung des Raums (S) erstreckt und in seiner Nähe gebogen ist, wobei der Sender angepasst ist, um eine geführte Welle im ersten Wellenleiter (DW1) zu induzieren, und wobei der erste Wellenleiter (DW1) angepasst ist, um eine geführte Welle innerhalb der Wand des röhrenförmigen Objekts (TO), die sich im Raum (S) befindet, zu induzieren,
   einem Empfänger (R) und einem zweiten Kopplungssystem, das einen zweiten Wellenleiter (DW2) umfasst, der sich in Richtung des Raums (S) erstreckt und in seiner Nähe gebogen ist,

wobei der zweite Wellenleiter (DW2) angepasst ist, um eine geführte Welle zu empfangen, die sich in der Wand des röhrenförmigen Objekts (TO), die sich im Raum (S) befindet, ausbreitet, und wobei der Empfänger angepasst ist, um eine geführte Welle im zweiten Wellenleiter (DW2) zu empfangen und eine Ausbreitungszeit zu messen, die für die Dicke der Wand des röhrenförmigen Objekts (TO) repräsentativ ist,

wobei der Sender (T) und der Empfänger (R) angepasst sind, um in einem Frequenzband zu arbeiten, das eine aus einem Bereich von 50 GHz - 500 GHz ausgewählte Frequenz umfasst.

2. Vorrichtung nach Anspruch 1, **dadurch gekennzeichnet, dass** der Sender (T) und der Empfänger (R) angepasst sind, um in einem Frequenzband zu arbeiten, das eine aus einem Bereich von 70 GHz - 250 GHz ausgewählte Frequenz umfasst.

3. Vorrichtung nach Anspruch 2, **dadurch gekennzeichnet, dass** der Sender (T) und der Empfänger (R) angepasst sind, um in einem Frequenzband zu arbeiten, das eine aus einem Bereich von 70 GHz - 150 GHz ausgewählte Frequenz umfasst.

4. Vorrichtung nach Anspruch 2, **dadurch gekennzeichnet, dass** der Sender (T) und der Empfänger (R) angepasst sind, um innerhalb eines Frequenzbands zu arbeiten, das eine aus einem Bereich von 150 GHz - 250 GHz ausgewählte Frequenz umfasst.

5. Vorrichtung nach einem der vorhergehenden Ansprüche, **dadurch gekennzeichnet, dass** der Sender (T) und der Empfänger (R) in einem einzelnen Sensor mit einem Referenzkanal integriert sind.

6. Vorrichtung nach Anspruch 5, **dadurch gekennzeichnet, dass** der einzelne Sensor ein Frequenzmodulierte-Kontinuierliche-Welle-Radarsensor, FMCW-Radarsensor, ist.

7. Verfahren zum Prüfen der Dicke einer Wand eines dielektrischen röhrenförmigen Objekts (TO) durch Richten einer Strahlung in das röhrenförmige Objekt (TO) und Empfangen der Strahlung von dem röhrenförmigen Objekt (TO), das sich mindestens teilweise in einem Raum (S) befindet, Messen einer Verzögerung und Bestimmen der Dicke der Wand des röhrenförmigenObjekts (TO) aus der Verzögerung, **dadurch gekennzeichnet, dass** die Strahlung eine Millimeterwellenstrahlung in einem Frequenzband ist, das eine Frequenz aus einem Bereich von 50 GHz - 500 GHz umfasst, und die Strahlung vom Sender (T) in die Wand des röhrenförmigen Objekts (TO) gekoppelt wird, sodass sich die Strahlung in Form einer geführten Welle innerhalb der Wand des röhrenförmigen Objekts (TO) ausbreitet und anschließend in den Empfänger (R) gekoppelt wird.

8. Verfahren nach Anspruch 7, **dadurch gekennzeichnet, dass** die Strahlung eine Mikrowellenstrahlung in einem Frequenzband ist, das eine Frequenz aus einem Bereich von 70 GHz - 250 GHz umfasst.

9. Verfahren nach Anspruch 8, **dadurch gekennzeichnet, dass** die Strahlung eine Mikrowellenstrahlung in einem Frequenzband ist, das eine Frequenz aus einem Bereich von 70 GHz - 150 GHz umfasst.

10. Verfahren nach Anspruch 8, **dadurch gekennzeichnet, dass** die Strahlung eine Mikrowellenstrahlung in einem Frequenzband ist, das eine Frequenz aus einem Bereich von 150 GHz - 250 GHz umfasst.

11. Verfahren nach Anspruch 10, **dadurch gekennzeichnet**, dassder Modus TE0 innerhalb der Wand des röhrenförmigen Objekts induziert wird.

12. Verfahren nach Anspruch 11, **dadurch gekennzeichnet, dass** das röhrenförmige Objekt (TO) während des Prüfens kontinuierlich durch den Raum (S) bewegt wird.

13. Verfahren nach einem der vorhergehenden Ansprüche, **dadurch gekennzeichnet, dass** der Sender (T) und der Empfänger (R) in um 10 mm bis 50 mm beabstandeten Bereichen an die Wand des röhrenförmigen Objekts (TO) gekoppelt sind.

**Revendications**

1. Dispositif permettant de tester l'épaisseur d'une paroi d'un objet tubulaire diélectrique (TO), présentant :

un espace **(S)** apte à recevoir au moins une partie de la paroi de l'objet tubulaire **(TO),**

un émetteur **(T)** et un premier système de couplage comprenant un premier guide d'onde **(DW1)** s'étendant vers ledit espace **(S)** et courbé à sa proximité, dans lequel l'émetteur est apte à induire une onde guidée dans le premier guide d'onde **(DW1)** et le premier guide d'onde **(DW1)** est apte à induire une onde guidée à l'intérieur de la paroi de l'objet tubulaire **(TO)** situé dans ledit espace **(S),**

un récepteur **(R)** et un second système de couplage comprenant un second guide d'onde **(DW2)** s'étendant vers ledit espace **(S)** et courbé à sa proximité, dans lequel le second guide d'onde **(DW2)** est apte à recevoir une onde guidée se propageant dans la paroi de l'objet tubulaire **(TO)** situé dans ledit espace **(S)** et le récepteur est apte à recevoir une onde guidée dans le second guide d'onde **(DW2)** et à mesurer le temps de propagation représentatif de l'épaisseur de la paroi de l'objet tubulaire **(TO),**

dans lequel l'émetteur **(T)** et le récepteur **(R)** sont aptes à fonctionner à une bande de fréquence comprenant une fréquence sélectionnée à partir d'une plage comprise entre 50 GHz et 500 GHz.

2. Dispositif selon la revendication 1, **caractérisé en ce que** l'émetteur **(T)** et le récepteur **(R)** sont aptes à fonctionner à une bande de fréquence comprenant une fréquence sélectionnée parmi une plage comprise entre 70 GHz et 250 GHz.

3. Dispositif selon la revendication 2, **caractérisé en ce que** l'émetteur **(T)** et le récepteur **(R)** sont aptes à fonctionner à une bande de fréquence comprenant une fréquence sélectionnée parmi une plage comprise entre 70 GHz et 150 GHz.

4. Dispositif selon la revendication 2, **caractérisé en ce que** l'émetteur **(T)** et le récepteur **(R)** sont aptes à fonctionner dans une bande de fréquence comprenant une fréquence sélectionnée parmi une plage comprise entre 150 GHz et 250 GHz.

5. Dispositif selon l'une quelconque des revendications précédentes, **caractérisé en ce que** l'émetteur **(T)** et le récepteur **(R)** sont intégrés dans un capteur unique avec un canal de référence.

6. Dispositif selon la revendication 5, **caractérisé en ce que** le capteur unique est un capteur à onde continue modulée en fréquence radar.

7. Procédé permettant de tester l'épaisseur d'une paroi d'objets tubulaires diélectriques **(TO)** en dirigeant un rayonnement dans l'objet tubulaire **(TO)** et recevant le rayonnement depuis l'objet tubulaire **(TO)** situé au moins partiellement dans un espace **(S),** en mesurant un retard et en déterminant une épaisseur de la paroi de l'objet tubulaire **(TO)** à partir dudit retard, **caractérisé en ce que** le rayonnement est un rayonnement à onde millimétrique à une bande de fréquence comprenant une fréquence parmi une plage comprise entre 50 GHz et 500 GHz et le rayonnement de l'émetteur **(T)** est couplé dans la paroi de l'objet tubulaire **(TO)** de sorte que le rayonnement se propage sous une forme d'onde guidée à l'intérieur de la paroi de l'objet tubulaire **(TO)** et est ensuite couplé au récepteur **(R).**

8. Procédé selon la revendication 7, **caractérisé en ce que** le rayonnement est un rayonnement à micro-ondes à une bande de fréquence comprenant une fréquence dans la plage comprise entre 70 GHz et 250 GHz.

9. Procédé selon la revendication 8, **caractérisé en ce que** le rayonnement est un rayonnement à micro-ondes à une bande de fréquence comprenant une fréquence dans la plage comprise entre 70 GHz et 150 GHz.

10. Procédé selon la revendication 8, **caractérisé en ce que** le rayonnement est un rayonnement à micro-ondes à une bande de fréquence comprenant une fréquence dans la plage comprise entre 150 GHz et 250 GHz.

11. Procédé selon la revendication 10, **caractérisé en ce que** le mode TEo est induit dans la paroi de l'objet tubulaire.

12. Procédé selon la revendication 11, **caractérisé en ce que** l'objet tubulaire **(TO)** est déplacé en continu à travers l'espace **(S)** pendant le test.

13. Procédé selon l'une quelconque des revendications précédentes, **caractérisé en ce que** l'émetteur (T) et le récepteur **(R)** sont couplés à la paroi de l'objet tubulaire **(TO)** dans des zones espacées de 10 mm à 50 mm.

Fig. 1

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20190041200 A1
- EP 3480553 A
- EP 18204388 A
- WO 2008011865 A
- DE 2007001279
- WO 2011050959 A
- EP 2010006590 W
- US 2009010385 A1

### Non-patent literature cited in the description

- **M. Z. IKRAM ; A. AHMAD ; D. WANG.** High-accuracy distance measurement using millimeter-wave radar. *Proc. IEEE Radar Conf. (RadarConf),* April 2018, 1296-1300
- **M. PAULI et al.** Miniaturized millimeter-wave radar sensor for high accuracy applications. *IEEE Trans. Microw. Theory Techn.,* May 2017, vol. 65 (5), 1707-1715
- **B. GINSBURG ; S. RAMASWAMY ; V. RENTALA ; E. SEOK ; S. SANKARAN ; B. HAROUN.** A 160 GHz pulsed radar transceiver in 65 nm CMOS. *IEEE J. Solid-State Circuits,* April 2014, vol. 49 (4), 984-995